# EUROPEAN PATENT APPLICATION

(11) **EP 3 734 238 A1**
(43) Date of publication of application: **04.11.2020**
(21) Application number: 18894972.1
(22) Date of filing: 30.11.2018
(51) Int. Cl.: G01F 23/20, G01G 17/04, F17C 13/02, G08B 21/18

(54) **SYSTEM FOR MEASURING THE MASS OF AN LPG CONSUMPTION STREAM IN KG, LPG STREAM MEASURING DEVICE AND MOBILE DEVICE USED IN SUCH A SYSTEM**

(30) Priority: 27.12.2017 BR 102017028314
(71) Applicant: Supergasbras Energia Ltda., 32684-298 Betim, Minas Gerais (BR)
(72) Inventor: DE ALMEIDA BRAGA, Frederico Costa, 53130-410 Olinda, Pernambuco (BR); SILVA DE OLIVEIRA, Wellington Messias, 50750-060 Recife, Pernambuco (BR)
(74) Representative: Meyer-Dulheuer MD Legal Patentanwälte PartG mbB
(86) International application number: PCT/BR2018/050445
(87) International publication number: WO 2019/126849

(57) **Abstract**

The present invention relates to a system for measuring the mass of an LPG consumption stream in kg, an LPG stream measuring device and a mobile device used in such a system, which makes it possible to measure the mass of the stream of LPG actually consumed from an individual metallic LPG cylinder, the consumption of which is logged cumulatively on a totalizer (14) and is obtained on the basis of the difference between weighing the initial mass and the final mass of each metallic cylinder (2) (gas cylinder) placed in use, which basically comprises an LPG stream measuring device (3) and a mobile device (4).

## Description

### Field of the Invention

This invention relates to a system for measuring the mass of an LPG consumption stream in Kg, LPG stream measuring device and mobile device used in this system, which allows the mass measurement of the LPG flow actually consumed from a metallic cylinder of individual LPG, and this consumption measurement is made directly in Kg, consumption of which is recorded cumulatively in a totalizer, and obtained from the difference of the initial and final mass of each metallic cylinder (gas cylinder) placed in use.

### Basis of the Invention

Liquefied Petroleum Gas (LPG) is a mixture of the hydrocarbons Butane and Propane, which are obtained from oil refineries, and is presented in two phases: liquid and gas. Inside a gas cylinder under pressure, the liquid phase is at the bottom of the cylinder, and the gaseous part at the top of the cylinder.

The flow of consumption in residential and commercial cylinders occurs through a gas outlet in the upper part of the cylinder, and as the LPG gas flows, the liquid LPG vaporizes inside the cylinder. On the other hand, the flow of consumption in tanks (large cylinders) occurs through a gas outlet at the bottom of the cylinder, and as the liquid LPG flows the tank empties. In such cases the liquid LPG vaporizes outside the tank.

Outside the cylinder, the measurement of the consumption flow of gaseous LPG is made in the gas pipeline by a volumetric gas meter (m³). There are several types of LPG volumetric meters, however diaphragm meters are the most common in residential and commercial applications.

On the other hand, with regard to a tank (large cylinder), the flow measurement of the liquid LPG consumption is made in the pipeline by a mass meter (Kg). There are several types of LPG mass meters, however the "Coriolis" are the most common in industrial applications and auto tanks.

Some types of LPG meters known measure the flow of LPG gas in m³ in the gas pipe (volumetric measurement) and then mathematically convert this consumption to Kg (mass measurement). However, this operation is always costly and inaccurate, as it is necessary to know the volume (m³), temperature (°C), pressure (bar) and density (Kg/m³) of LPG during the entire consumption.

The consumer of LPG supplied in individual metallic cylinders (gas cylinders) buys this LPG in Kg (residential 13Kg and commercial 45Kg). In these cases, it is not possible to use mass meters, such as the "Coriolis" type, for example, to measure the consumption flow in Kg, as the gas is removed from inside the cylinder in the gas phase, that is, over the cylinder and not in the liquid phase, that is, below the cylinder.

The main inconveniences of measuring the flow of individual LPG consumption with volumetric gauges of LPG in the gas phase are:
(i) consumption is measured in m³, while LPG filled in residential and commercial metal cylinders is sold in Kg;
(ii) the conversion in m³/Kg is inaccurate, as it is done by means of a mathematical formula where the magnitudes of pressure, temperature and density of the LPG are unknown.

Some systems and equipment for measuring LPG gas in gas cylinders are known in the status of technique, among which we highlight the document MU8600361-5 U which describes an intelligent support for LPG gas cylinders consisting of a cap injected into reinforced aluminum or polymer, with a fitting for cylinders and at the bottom there is a box to hold the electronic scale system, which has in square and round formats four support displacement wheels. The support is equipped with an electronic scale system consisting of a DP 15/30 load cell or similar, reinforced shock absorber support, printed circuit, 127/220w electrical source, and electronic or liquid crystal display. The support may be coupled to new stoves by manufacturers of industries, which will then launch a product with significant added value on the market. The support will be equipped with an alarm system, which may be programmed to indicate the final stage of consumption of the cylinder at the level desired by the consumer.

The support described in the document above differs completely from the system and device of this invention as it adopts a weighing measurement system using an electronic scale.

Another document of status of technique is PI 0000791-9 which refers to a gas cylinder holder with coupled consumption indicator, intended for use as a gas cylinder holder with a coupled device that provides data to the user at the moment the cylinder is placed on it, in order to indicate the level of gas (quota) contained within said cylinder. Although it is not a scale, this support is based on the indication of level on the weight of the gas, deducting the weight of the container, consisting essentially of an upper cover, an internal intermediate base of the spring guides, as well as a lower cover, and these three parts pieces are assembled in order to provide a shape for the product, which also receives a nylon lock or similar to indicate a possible violation of the product. Once the parts are assembled and when the cylinder is positioned at the base of the device, the springs integrated into the set will give in from top to bottom in proportion to the gas content inside the cylinder, after deducting the weight of the latter. By doing so, the user has the indication of the volume of gas in the cylinder, through display in a level indicator.

Likewise, the support described above is based on measuring the weight of the gas cylinder, unlike this invention. Moreover, because the measurement is related to the gas level (quota) contained inside the cylinder, any unevenness in the floor where the support is installed will lead to an incorrect measurement of the amount of gas in the cylinder.

As seen in the documents above, as well as in other documents, such as PI 1001460-8, MU 8701432-7, MU 8201194-0 and PI 0902510-3, none of the aforementioned documents provides a direct measurement of the LPG consumed in Kg - being LPG filled in an individual metallic cylinder - nor do they enable an early warning of the emptying of the gas in the cylinder in use, in order to allow its exchange before it is totally empty.

In order to overcome the problems above, as well as the impossibility of measuring the flow of individual consumption of LPG directly in Kg by the flow of the liquid phase, as the LPG is removed from the residential and commercial cylinders in the gas phase, this invention was developed.

A simplified summary of the modalities described in this invention will be presented below, which is not an extensive overview of all the modalities contemplated herein. And it does not intend to identify fundamental or critical elements, nor to outline the scope of such modalities. Its sole purpose is to present some concepts of the modalities described in a simplified manner, as an introduction to the more detailed description that will be presented below.

### Summary of the Invention

This invention relates to a system for measuring the mass of an LPG consumption stream in Kg, LPG stream measuring device and mobile device used in this system, which allows the mass measurement of the LPG flow actually consumed from a metallic cylinder of individual LPG, and this consumption measurement is made directly in Kg, consumption of which is recorded cumulatively in a totalizer, and obtained from the difference of the initial and final mass of each metallic cylinder (gas cylinder) put to use, comprising basically of an LPG flow meter and mobile device.

The main advantage of this invention is to provide the consumer with a direct mass measurement of the consumption flow of LPG in Kg, from an individual metallic cylinder.

Another advantage of this invention is that it alerts the consumer in advance about the emptying of the gas in the cylinder, thus enabling an eventual early change, so that the gas does not run out.

Another advantage of this invention is that it provides an efficient and accurate measurement of the consumption of LPG in the cylinder, without the need to use mathematical calculations to convert the value from m³ to kg.

Another advantage of this invention is to provide the consumer with low cost system, flow meter and device for measuring LPG consumption.

In order to achieve the aforementioned purposes, one or more modalities comprise the aspects that will be described below and specifically set out in the claims. The following description and attached drawings have certain details illustrating aspects of the described modalities. However, these aspects indicate only a few of the different ways in which the principles of different modalities may be used. Furthermore, it is intended that the modalities described include these aspects and their equivalents.

### Brief Description of the Figures

The characteristics, nature and advantages of this description will be more visible from the detailed description set out below when read in conjunction with the drawings, in which the same references refer to the same elements, in which:
Figure 1 - illustrates a schematic view of the system for measuring the mass of an LPG consumption stream in Kg, LPG stream measuring device and mobile device used in this system, object of this invention;
Figure 2 - illustrates a detailed view of Figure 1;
Figure 3 - illustrates a view of the operation diagram of the system for measuring the mass of an LPG consumption stream in Kg, object of this invention;
Figure 4 - illustrates a perspective of the lower view of the LPG stream measuring device, object of this invention;
Figure 5 - illustrates a detailed view of Figure 4.

### Detailed Description of the Invention

As illustrated in the attached figures, this invention relates to a SYSTEM FOR MEASURING THE MASS FOR AN LPG CONSUMPTION STREAM IN KG, LPG STREAM MEASURING DEVICE AND MOBILE DEVICE USED IN SUCH A SYSTEM, and this consumption measurement is made directly in Kg, consumption of which is recorded cumulatively in a totalizer, and obtained from the difference of the initial and final mass of each metallic cylinder (gas cylinder) placed in use, comprising basically of a LPG stream measuring device (3) and mobile device (4).

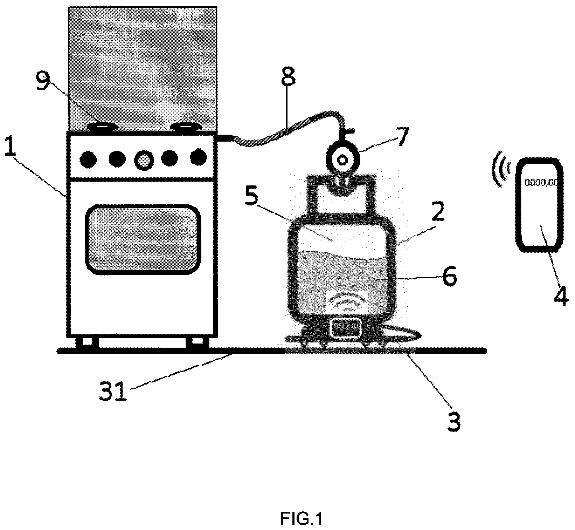

Reference will now be made to Figure 1, which illustrates a schematic view of a typical residential stove (1) with burners (9), supported on the LPG stream measuring device (3), both arranged on the floor of a kitchen (31), the stove (1) being connected through a hose (8) to a LPG cylinder (2), which stores, under high pressure, LPG gas (5) at the top, and liquid LPG (6) at the bottom, the cylinder (2) has a pressure regulating valve (7). The internal pressure of the gaseous LPG (5) forces its outlet through the pressure regulating valve (7), which delivers to the stove (1) the flow of gas for consumption within the burners (9) through the hose (8), and the LPG consumption flow measurement is recorded constantly on a mobile device (4), such as a mobile phone, a tablet, or any other similar device.

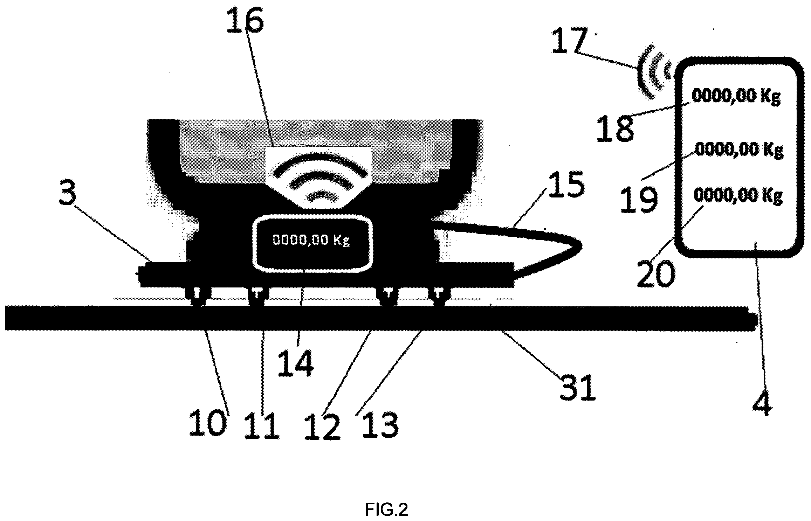

We now refer to Figure 2 which shows in detail the cylinder (2) resting on the LPG stream measuring device (3) consisting of a tray (29) under which load sensors (10, 11, 12, 13) are attached, supported on the floor (31) where the metallic cylinder (2) rests. This way, it is possible to weigh the set of metallic cylinders (tare) plus LPG filled gas (5) and liquid (6). An electromechanical lock (15) is also provided to hold the metallic cylinder (2) to the LPG stream measuring device (3) during the entire consumption period, and the tray (29) is equipped with a panel with a built-in communication radio (16), and a totalizer (14), which indicates in Kg, the accumulated total of the entire flow of LPG consumption measured. The mobile device (4) is equipped with a display that shows three values, the first value (18) being the same value constant in the totalizer (14) of the LPG stream measuring device (3) when the cylinder is installed, a second value (19) that corresponds to the instantaneous flow of LPG in Kg from the cylinder in use, and a third value (20) that corresponds to the value that the totalizer (14) shall record when the cylinder is removed; The LPG flow meter (3) communicates with the mobile device (4) through the communication radios (16, 17).

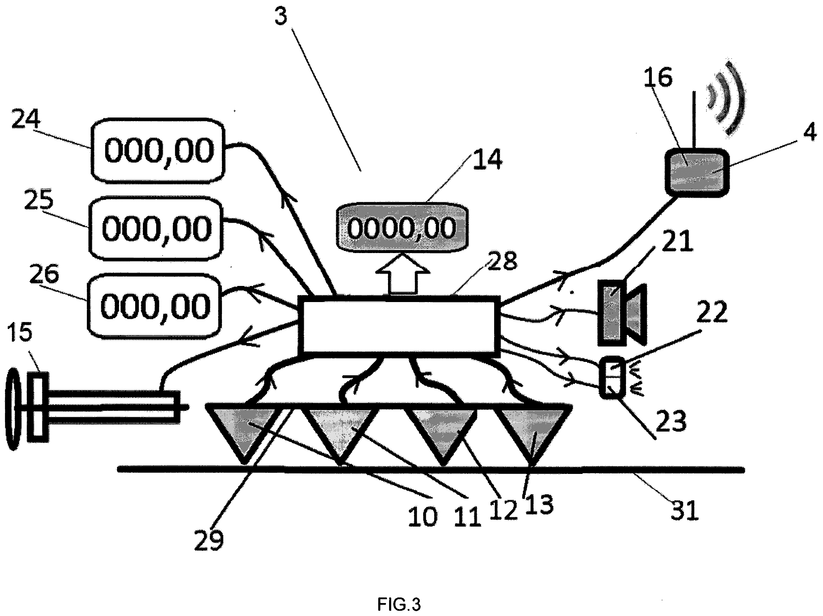

Reference is now made to Figure 3, which illustrates the operation diagram of the system for measuring the mass of an LPG consumption stream in Kg, which comprises the LPG stream measuring device (3) equipped with an electronic processor (28), electrically connected to the load sensors (10, 11, 12, 13), which simultaneously and constantly send electrical weighing signals to said processor (28), which from these readings controls and performs the measurement in kg of the LPG consumption flow from the metal cylinder in use. The communication radio (16) serves for communication between the LPG stream measuring device (3) and the mobile device (4). The sound buzzer (21) arranged in the tray (29) serves to emit warning and alarm signals throughout the process of consumption measurement in the cylinder in use, and the green (22) and red (23) LEDs also arranged in the tray (29) signal the operating status of the LPG stream measuring device (3). The totalizer panel (14) of consumption accumulated in Kg shows how much LPG consumption flow has been measured so far, and the electronic processor (28) records an initial weight (24) of the cylinder (LPG + tare weight of the cylinder) when installing and locking the cylinder in use, an instant weight (25) of the cylinder in use (LPG + tare weight of the cylinder), and a weight of LPG consumed (26) in Kg of this cylinder in use, from the moment an electromechanical lock (15) is installed and locked.

The measurement is made by consumption cycles, which is the interval between the initial weighing and the final weighing of the cylinder (2) in use. To start a reading cycle, place the cylinder (2) on the measuring tray (29) of the LPG flow meter (3). The regulating valve (7) must not be threaded yet, so that the initial weighing reflects only the tare weight of the cylinder (2), plus the gaseous (5) and liquid (6) LPG contained therein. For initial weighing, the mobile device (4) must be paired via radio (16, 17) with the LPG stream measuring device (3). The electromechanical lock (15) must be inserted in the hole (30) of the base of the metallic cylinder in use (2). Thus, it is guaranteed that the same cylinder will be permanently associated with the LPG stream measuring device (3) during the entire consumption period. With the cylinder (2) stabilized on the weighing tray (29), the > mobile device (4) records a first value (18) that corresponds to the same reading on the totalizer panel (14) of the LPG flow meter (3). This is done by a radio control (16) and (17), and controlled by the electronic processor (28). The initial weight of the cylinder in use (LPG + tare weight of the cylinder) is recorded by the electronic processor (28) in the initial weight memory register (24). From that moment, the gas consumption of the cylinder may be initiated by placing the regulating valve (7), but the cylinder (2) should preferably remain on the weighing tray (29) of the LPG stream measuring device (3) throughout the consumption period, to enable the alert of the proximity of the emptying of the gas in the cylinder.

When the value in Kg of the accumulated consumption of the cylinder (2) in use, in the consumed LPG record (26) of the LPG stream measuring device (3) is close to the minimum capacity of the cylinder (2) (For example: 13Kg residential and 45Kg commercial) the processor generates an audible (21) and luminous (23) alert locally. At the same time, it sends this alert via radio (16) to the mobile device (4), which may then be remotely received. With this, the cylinder (2) in use may be replaced by a full one before the gas runs out in the burners (9) of the stove (1), for example.

To carry out the final weighing of the cylinder (2) in use, the valve (7) must be removed so that the weighing reflects only the sum of the cylinder's tare weight with the remaining LPG. Thus, through the mobile device (4) paired via radio (17, 16) with the LPG stream measuring device (3), the processor (28) is given a final weighing command. The processor (28) adds the value in the consumed LPG memory register (26) to the totalizer (14), updating the accumulated value. This value is transferred to the paired mobile device (4), so it catalogs how much LPG was consumed from the cylinder (2) in use. In this manner, the LPG distributor, for example, could charge in kg only the LPG consumed, and not a full load that it would replace.

After final weighing, the user unlocks the electromechanical lock (15) and releases the cylinder (2) in use for replacement. When the cylinder (2) in use is removed from the top of the tray (29), the processor (28) resets the records of the weight values (24), (25) and (26), ending the measurement cycle of consumption flow of the cylinder (2) removed. If a new cylinder (2) is placed, to start a new consumption flow measurement cycle, it will require a paired mobile device command (4) in order to start a new cycle with the placement of the electromechanical lock (15).

If the electromechanical lock (15) is broken, the cylinder (2) is removed from the tray (29), or its weight is increased or reduced abruptly during the measurement cycle, the processor (28) will generate alarms and light alerts (22) and (23) and sound alerts (21), in addition to sending them via radio (16) to the mobile device (4).

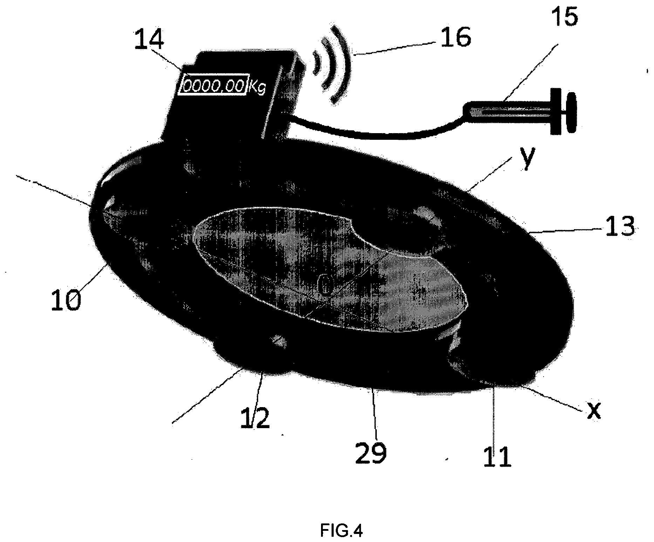

We now refer to Figure 4, which illustrates the LPG stream measuring device (3), where the load sensors (10, 11) create an imaginary X axis, and the load sensors (12, 13) create an imaginary Y axis. The crossing of these two imaginary axes, X and Y, form the point 0, which is the center of the weighing tray (29). The LPG stream measuring device (3) is supported on the floor (31) to receive the cylinder (2) in its tray (29), and this weight must be evenly distributed among the four load sensors (10, 11, 12, 13). The center of mass is at the center point 0 of the tray weighing platform (29). Any slope on the floor will cause the center of mass to move from point 0 towards the X and Y axes. Thus, the processor (28) calculates the slope and alerts if it is beyond the maximum legally allowed value, so as not to compromise weighing.

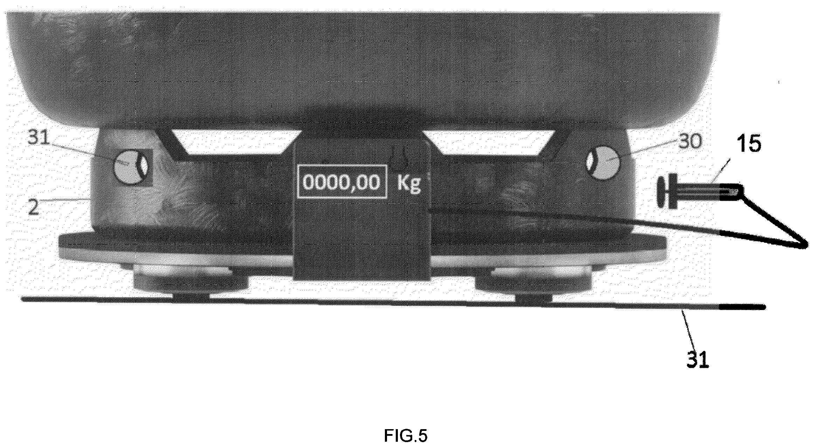

Reference is now made to Figure 5, which shows in detail the lock (15) that may fit in any of the holes (30) of the base of the metallic cylinder (2).

This invention allows the consumer to replace the cylinder (2) in use with a full one before the gas runs out.

Likewise, it allows the consumer to pay only for the LPG consumed in the cylinder, and not the amount of a full load that it would replace.

It will be easily understood by those skilled in the art that changes may be made to the invention without thereby departing from the concepts set out in the preceding description. These changes must be considered to be within the scope of the invention. Consequently, the particular modalities described in detail above are merely illustrative and not limiting as to the scope of the invention, to which the full extent of the attached claims and any and all equivalents thereof must be provided.

## Claims

1. System for measuring the mass of an LPG consumption stream in kg, **characterised in that** comprises:
- a LPG stream measuring device (3) consisting of a tray (29) under which load sensors (10, 11, 12, 13) are attached, which are supported on the floor (31) where the metallic cylinder is (2), and the tray (29) is equipped with a panel with a built-in communication radio (16), and a totalizer (14) that indicates in Kg the accumulated total of all measured LPG consumption flow, the LPG stream measuring device (3) additionally comprising an electronic processor (28) electrically connected to the load sensors (10, 11, 12, 13), which records an initial weight (24) of the installed cylinder (2) (LPG + cylinder tare), an instantaneous weight (25) of the cylinder in use (LPG + tare weight of the cylinder), and a weight of LPG consumed (26) in Kg of the cylinder in use;
- a mobile device (4) equipped with a display that shows three values, the first value (18) being the same value constant in the totalizer (14) of the installed cylinder (2), a second value (19) that corresponds to the instantaneous flow of LPG in Kg from the cylinder (2) in use, and a third value (20) that corresponds to the value that the totalizer (14) records when the cylinder (2) is removed;
wherein the LPG stream measuring device (3) communicates with the mobile device (4) through the communication radios (16, 17);
wherein the first value (18) corresponds to the initial weight (24) of the installed cylinder (2), the second value (19) corresponds to the instantaneous weight (25) of the cylinder in use, and the third value (20) corresponds to the weight of consumed LPG (26) in Kg;
wherein the load sensors (10, 11, 12, 13) simultaneously and constantly send electrical weighing signals from the cylinder (2) to the processor (28) that controls and performs the measurement in kg of the cylinder's LPG consumption flow (2), and transmits the values of the initial weight (24) of the cylinder (2) installed, the instantaneous weight (25) of the cylinder in use, and the weight of LPG consumed (26) in Kg, to the mobile device (4);
and the measurement is made by consumption cycles between the initial weighing and the final weighing of the cylinder (2) in use.

2. System, according to claim 1, **characterised in that** further comprises electromechanical lock (15) that holds the metal cylinder (2) to the LPG stream measuring device (3) during the entire consumption period.

3. System, according to claim 1, **characterised in that** the tray (29) additionally comprises an audible buzzer (21) that sends warning and alarm signals during the entire consumption measurement process in the cylinder in use, and the green (22) and red (23) LEDs that signal the operating status of the LPG flow meter (3).

4. LPG stream measuring device (3), used in the system for measuring the mass of an LPG consumption stream in kg, as defined in any of claims 1 to 3, **characterised in that** comprises a tray (29) under which load sensors (10, 11, 12, 13) are attached, the tray (29) being equipped with a panel with a built-in radio communication (16), and a totalizer (14) which indicates in Kg the accumulated total of the entire flow of consumption of measured LPG, the tray also comprising a sound buzzer (21), and the green (22) and red (23) LEDs, the LPG flow meter (3) additionally comprising an electronic processor (28) electrically connected to the sensors load (10, 11, 12, 13).

5. LPG stream measuring device (3), according to claim 4, **characterised in that** the load sensors (10, 11) that form an imaginary axis X, and the load sensors (12, 13) form another imaginary axis Y, where the imaginary axes X and Y form point 0, which is the center of the weighing tray (29), so that the processor (28) calculates the inclination and alerts if the cylinder (2) is inclined beyond the maximum value legally allowed.

6. LPG stream measuring device (3), according to claim 4, **characterised in that** the electronic processor (28) registering an initial weight (24) of the installed cylinder (2) (LPG + tare weight of the cylinder), an instantaneous weight (25) of the cylinder in use (LPG + tare weight of the cylinder), and a weight of LPG consumed (26) in Kg of the cylinder in use.

7. Mobile device (4), used in the system for measuring the mass of an LPG consumption stream in kg, as defined in any of claims from 1 to 3, **characterised in that** comprises a display that shows three values, the first value (18) that corresponds to the initial weight of the installed cylinder (2), a second value (19) that corresponds to the instantaneous weight of the cylinder in use, and a third value (20) that corresponds to the weight of LPG consumed (26), in Kg.

8. Mobile device (4), according to claim 7, **characterised in that** the mobile device is one of the following: a mobile phone, a tablet, or any other similar device.

## Amended claims

### Amended claims under Art. 19.1 PCT

1. System for measuring the mass of an LPG consumption stream in kg, comprising:
- a LPG stream measuring device (3) consisting of a tray (29) under which load sensors (10, 11, 12, 13) are attached, which are supported on the floor (31) where the metallic cylinder is (2), and the LPG stream measuring device (3) additionally comprises an electronic processor (28) electrically connected to the load sensors (10, 11, 12, 28), which sends electrical weighing signals from the cylinder (2) to the processor (28) that records an initial weight (24) of the installed cylinder (2)(LPG + cylinder tare), an instantaneous weight (25) of the cylinder in use (LPG + tare weight of the cylinder), and a weight of LPG consumed (26) in Kg of the cylinder in use;
- a mobile device (4) equipped with a display that shows the data recorded by the electronic processor (28);
**characterised in that**
- the tray (29) is equipped with a panel with a built-in communication radio (16), and a totalizer (14), which indicates in Kg, the accumulated total of the entire flow of LPG consumption measured;
wherein a mobile device (4) shows in the display three values, the first value (18) being the same value constant in the totalizer (14) of the installed cylinder (2), a second value (19) that corresponds to the instantaneous flow of LPG in Kg from the cylinder (2) in use, and a third value (20) that corresponds to the value that the totalizer (14) records when the cylinder (2) is removed;
wherein the LPG stream measuring device (3) communicates with the mobile device (4) through the communication radios (16, 17);
wherein the first value (18) corresponds to the initial weight (24) of the installed cylinder (2), the second value (19) corresponds to the instantaneous weight (25) of the cylinder in use, and the third value (20) corresponds to the weight of consumed LPG (26) in Kg;
wherein the processor (28) controls and performs the measurement in kg of the LPG consumption flow of the metallic cylinder (2), and transmits the values of the initial weight (24) of the installed cylinder (2), the instantaneous weight (25) of the cylinder in use, and the weight of LPG consumed (26) in Kg, to the mobile device (4);
and the measurement is made by consumption cycles between the initial weighing and the final weighing of the cylinder (2) in use.

2. System, according to claim 1, **characterised in that** further comprises an electromechanical lock (15) that holds the metal cylinder (2) to the LPG stream measuring device (3) during the entire consumption period.

3. System, according to claim 1, **characterised in that** the tray (29) additionally comprises an audible buzzer (21) that sends warning and alarm signals during the entire consumption measurement process in the cylinder in use, and the green (22) and red (23) LEDs that signal the operating status of the LPG stream measuring device (3).

4. LPG stream measuring device (3), used in the system for measuring the mass of an LPG consumption stream in kg, as defined in any of claims 1 to 3, comprising a tray (29) under which load sensors (10, 11, 12, 13), **characterised in that** the tray (29) is equipped with a panel with a built-in radio communication (16), and a totalizer (14) which indicates in Kg the accumulated total of the entire flow of consumption of measured LPG, the tray also comprising a sound buzzer (21), and the green (22) and red (23) LEDs, the LPG stream measuring device (3) additionally comprising an electronic processor (28) electrically connected to the sensors load (10, 11, 12, 13).

5. LPG stream measuring device (3), according to claim 4, **characterised in that** the load sensors (10, 11) that form an imaginary axis X, and the load sensors (12, 13) form another imaginary axis Y, where the imaginary axes X and Y form point 0, which is the center of the weighing tray (29), so that the processor (28) calculates the inclination and alerts if the cylinder (2) is inclined beyond the maximum value legally allowed.

6. LPG stream measuring device (3), according to claim 4, **characterised in that** the electronic processor (28) registering an initial weight (24) of the installed cylinder (2) (LPG + tare weight of the cylinder), an instantaneous weight (25) of the cylinder in use (LPG + tare weight of the cylinder), and a weight of LPG consumed (26) in Kg of the cylinder in use.

7. Mobile device (4), used in the system for measuring the mass of an LPG consumption stream in kg, as defined in any of claims from 1 to 3, **characterised in that** comprises a display that shows three values, the first value (18) that corresponds to the initial weight of the installed cylinder (2), a second value (19) that corresponds to the instantaneous weight of the cylinder in use, and a third value (20) that corresponds to the weight of LPG consumed (26), in Kg.

8. Mobile device (4), according to claim 7, **characterised in that** the mobile device is one of the following: a mobile phone, a tablet, or any other similar device.
